(19) Europäisches Patentamt
European Patent Office
Office européen des brevets

(11) **EP 2 814 151 A2**

(12) **EUROPÄISCHE PATENTANMELDUNG**

(43) Veröffentlichungstag:
**17.12.2014 Patentblatt 2014/51**

(51) Int Cl.:
*H02M 1/00* (2007.01)

(21) Anmeldenummer: **14170024.5**

(22) Anmeldetag: **27.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **14.06.2013 DE 102013211121**

(71) Anmelder: **ROBERT BOSCH GMBH**
**70442 Stuttgart (DE)**

(72) Erfinder:
• **Krauter, Gisbert**
  **71576 Burgstetten (DE)**
• **Bohl, Raimund**
  **71296 Heimsheim (DE)**

(54) **Wechselrichter**

(57) Es werden ein Wechselrichter (10) und ein Verfahren zum Wechselrichten vorgestellt. Bei dem Wechselrichter (10) ist eine Gleichtakt-Gegentakt-Drossel (18) vorgesehen, die in einem Bauteil integriert ist.

**Fig. 1**

EP 2 814 151 A2

**Beschreibung**

Die Erfindung betrifft einen Wechselrichter, insbesondere einen Wechselrichter für eine Photovoltaikanlage, und ein Verfahren zum Wechselrichten einer Gleichgröße, insbesondere einer Gleichgröße, die von einem Photovoltaikmodul ausgegeben wird.

Stand der Technik

Wechselrichter, die auch als Inverter bezeichnet werden, sind elektrische Geräte, die dazu dienen, eine Gleichspannung in eine Wechselspannung bzw. einen Gleichstrom in einen Wechselstrom umzurichten. Dabei können Wechselrichter für die Erzeugung von einphasigem oder mehrphasigem, üblicherweise dreiphasigem Wechselstrom ausgelegt sein.

Der hierin beschriebene Wechselrichter dient insbesondere für die elektrische Ener-giewandlung bei Photovoltaiksystemen, bei denen aus Gleichstrom Wechselstrom erzeugt werden soll.

Aus der Druckschrift DE 10 2009 029 387.6 A1 ist eine Wechselrichteranordnung bekannt, die insbesondere als Solarzelleninverter eingesetzt wird. Mit dieser Anordnung soll eine hohe Effizienz erreicht werden. Die Wechselrichteranordnung umfasst eine Halbleiter-Brückenschaltung, wobei außerdem ein Gleichstromsteller zur Erzeugung von Halbwellen einer ausgangsseitigen Wechselspannung vorgesehen ist und die Brü-ckenschaltung dem Gleichstromsteller nachgeschaltet ist und lediglich als Polwender auf die Halbwellen wirkt.

Bei Wechselrichtern für Photovoltaikanlagen ist zu beachten, dass Potentialsprünge der Spannung an den Gleichstrom-Anschlüssen des Photovoltaikgenerators, bezogen auf Erde, zu unerwünschten kapazitiven Ableitströmen führen. Diese Spannungssprünge entstehen insbesondere durch Schaltfolgen der Leistungshalbleiter im Inverter. Abhängig von der zugrundeliegenden Schaltungstopologie können diese Spannungssprünge z. B. bei einem Wechsel von einem speisenden Zustand in einen Freilaufzustand oder umgekehrt auftreten.

Um die vorstehend erläuterten Potentialsprünge an den Gleichstrom-Anschlüssen des Photovoltaikinverters zu verhindern, sind eine Reihe von Maßnahmen bekannt:

a) Verzicht auf das Schalten von Zuständen, die zu Spannungssprüngen führen, z.B. bei einer reinen H4-Brücke mit jeweils einer Induktivität in den Wechselspannungs-anschlüssen, Verzicht auf das Schalten von Freilaufzuständen.

b) Bereitstellung eines Freilaufpfades, der vom Gleichstromanschluss für die Photovoltaikmodule entkoppelt ist, wie dies z.B. in den Druckschriften DE10 2004 030 912 B3 und EP 1 369 985 B1 beschrieben ist.

c) Galvanische Trennung durch Einsatz eines Transformators.

d) Bezug eines Potentials der DC-Seite, insbesondere des Zwischenkreismittelpunkts, auf Erde. Dies ist bspw. in der Druckschrift EP 1 861 914 B1 dargelegt.

e) Ein weiterer Vorschlag ist die Verwendung von Gleichtakt-Drosseln (CommonModeChoke, CMC) an den Anschlüssen des Photovoltaikgenerators, was in der Praxis derzeit jedoch nicht eingesetzt wird.

Die vorstehend beschriebenen Maßnahmen haben jedoch jeweils folgende Nachteile:

a) Höhere Verluste bzw. geringerer Wirkungsgrad aufgrund größerer Stromrippel bei gleicher Schaltfrequenz.

b) Zusätzlicher Bauteilaufwand insgesamt sowie ggf. erhöhte Durchlassverluste bei Einsatz zusätzlicher Leistungshalbleiter im speisenden Strompfad.

c) Höhere Verluste durch den Transformator sowie zusätzlicher Materialaufwand und höheres Gewicht.

d) Spezielle Modulationsverfahren (wie Flattop) zur Wirkungsgradsteigerung und/oder Absenkung der benötigten minimalen Zwischenkreisspannung sind nicht möglich, welche ein zum Neutralpunkt des Netzes verschiebbares Nullpunktsystem benötigen.

e) Zusätzliche große Gleichtakt-Drossel notwendig (Gewicht, Kosten)

Offenbarung der Erfindung

Vor diesem Hintergrund werden ein Wechselrichter mit den Merkmalen des Anspruchs 1 und ein Verfahren zum Wechselrichten gemäß Anspruch 8 vorgestellt. Weitere Ausgestaltungen der Erfindung ergeben sich aus den abhängigen Patentansprüchen und der Beschreibung.

Die Erfindung beschreibt eine Vorrichtung, die Potentialsprünge an den Gleichstrom-anschlüssen, wie diese vorstehend beschrieben sind, verhindert und dabei auf den Einsatz eines Transformators verzichtet. Die Unterdrückung der Potentialsprünge auf der Gleichgrößenseite bzw. DC-Seite wird dabei durch Einsatz einer Gleichtaktdrossel auf der Wechselgrößenseite bzw. AC-Seite sichergestellt. Die zusätzlich vorgesehene Gegentaktdrossel dient zum Bereitstellen eines sinusförmigen Signals.

Des Weiteren kann die Gleichtakt-Gegentakt-Drossel und damit die Gleichtaktdrossel auf der Gleichgrößenseite angebracht sein, um dort die Potentialsprünge zu verhindern. Dies ist insbesondere dann sinnvoll, wenn auf der Gleich-größenseite noch ein oder mehrere DC-Steller angebracht sind, die ihrerseits auch Potentialsprünge verursachen. In diesem Fall kann die entsprechende Gleichtaktdrossel zusätzlich zu den durch den Inverter verursachten Potentialsprüngen auf der AC-Seite auch die Potentialsprünge unterdrücken, die durch den entsprechenden DC-Steller erzeugt werden. Bei einem geeigneten Taktverfahren können die Potentialsprünge sich sogar gegenseitig zumindest teilweise aufheben.

Die eingestellte Gleichtaktdrossel auf der AC-Seite arbeitet im Bereich der Taktfrequenz des Inverters bzw. der DC-Steller, üblicherweise in der Größenordnung 8 kHz bis 50 kHz, um den bei den Umschaltvorgängen der Halbleiter im Inverter oder im DC-Steller auftretenden Spannungssprung aufzunehmen. Aus EMV-Gründen eingesetzte Gleichtaktdrosseln sind hingegen derart ausgelegt, dass diese insbesondere in einem Bereich von > 150 kHz arbeiten und damit nicht gezielt die Grundfrequenz vorstehend beschriebener Potentialsprünge aufnehmen.

Dabei wird in Ausgestaltung die gezielte Verbindung einer Schaltungseinrichtung mit einer kombinierten Gleichtakt-Gegentaktdrossel (CMDM-Drossel) auf der Wechselgrö-ßen- bzw. AC-Seite des Inverters eingesetzt. Dies ist sowohl im einphasigen Fall bei z.B. einer H4-Brücke möglich, wie auch im drei-/mehrphasigen Fall bei z.B. einem 3-phasigen Brückenzweig mit Freilauf oder NPC möglich. Damit können Sprünge der Spannungspotenziale an den Gleichstrom-Anschlüssen verhindert werden.

In weiterer Ausgestaltung wird die gezielte Verbindung einer Inverterschaltung mit einer kombinierten Gleichtakt-Gegentaktdrossel auf der Gleichgrößen- bzw. DC-Seite des Inverters eingesetzt, insbesondere dann, wenn ein oder mehrere Gleichstrom-bzw. DC-Steller auf der Gleichgrößen-Seite der Gesamtschaltung vorgesehen werden, bei denen die Gleichstrom-Steller derart ausgeführt sind, dass Potentialsprünge auftreten. Dies ist insbesondere bei geteilten Gleichstrom-Stellern der Fall, die zeitversetzt betrieben werden, wodurch sich Wechselanteile in den Strömen gegenseitig aufheben können.

Der Vorteil gegenüber den vorstehend beschriebenen Maßnahmen gemäß dem Stand der Technik ist, dass gegenüber

(a) nicht auf den Freilauf verzichtet werden muss,

(b) auf zusätzliche Leistungshalbleiter-Bauteile verzichtet werden kann,

(c) kein verlustbehafteter Transformator zusätzlich benötigt wird,

(d) spezielle Modulationsverfahren zur Wirkungsgradsteigerung eingesetzt werden können,

(e) durch die mögliche Kombination von Gleichtakt-Drosselfunktion und Gegentakt-Drosselfunktion bzw. Speicherdrosselfunktion in einer integrierten Drossel (CMDM-Drossel) der gesamte Drosselaufwand deutlich kleiner ausfällt, als bei der Variante mit einer CM-Drossel auf der PV-Generatorseite.

Weiterhin ergeben sich durch die Doppelfunktion der Drossel EMV-Vorteile, da Gleich-taktstörungen durch die Gleichtaktdrosselfunktion ohne zusätzliche Bauelemente gefiltert werden können. Üblicherweise wird ansonsten bei einem Wechselrichter mit Frei-laufpfad eine separate CM-Drossel zur EMV-Filterung auf der Wechselgrößen-Seite benötigt.

Zu beachten ist, dass die eingesetzte Gleichtaktdrossel bzw. die Gleichtaktdrosselfunk-tion der CMDM-Drossel für einen Bereich der Taktfrequenz des Inverters ausgelegt ist, im Gegensatz zu einer Gleichtaktdrossel für EMV, deren Einsatzbereich üblicherweise erst > 150 kHz ist.

Der vorgestellte Wechselrichter ist nicht auf eine bestimmte Richtung des Leistungs-flusses festgelegt. Wird die Richtung des Leistungsflusses umgekehrt, so erzeugt der Wandler aus einer Wechselgröße eine Gleichgröße. Ein derartiger Einsatz ist bspw. beim Laden von Batterien für Elektrofahrzeuge vorgesehen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1    zeigt in einer schematischen Darstellung eine Ausführungsform des beschriebenen Wechselrichters.

Figur 2    zeigt eine Ausführung einer Gleichtakt-Gegentakt-Drossel.

Figur 3    zeigt eine weitere Ausführung einer Gleichtakt-Gegentakt-Drossel.

Figur 4    zeigt einen Wechselrichter.

Figur 5    zeigt einen weiteren Wechselrichter.

Figur 6    zeigt noch einen weiteren Wechselrichter.

Figur 7    zeigt Signalverläufe.

Figur 8    zeigt eine Ausführung des Wechselrichters.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

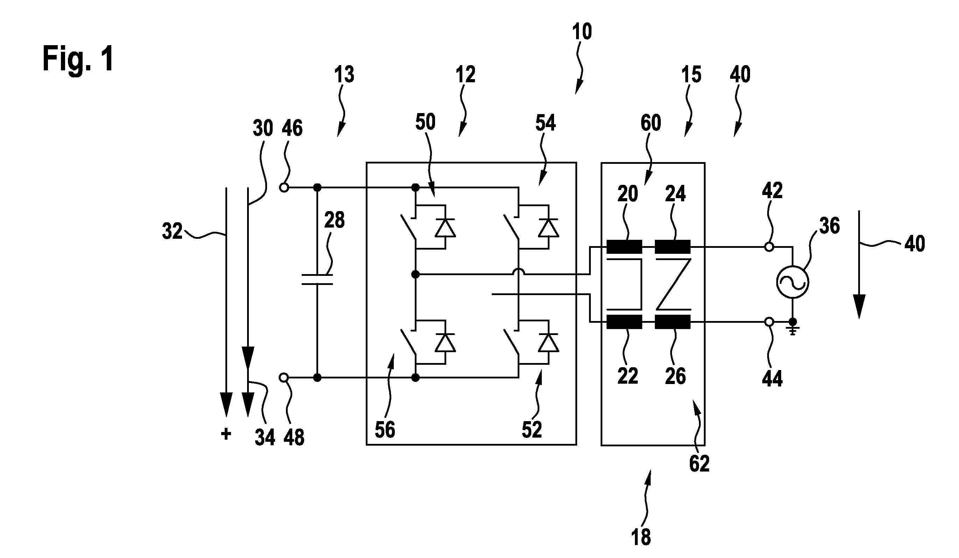

Der Aufbau einer Ausführungsform des beschriebenen Wechselrichters ist in einem Schaltbild in Figur 1, insgesamt mit der Bezugsziffer 10 bezeichnet, wiedergegeben. Die wesentlichen Elemente sind dabei eine Inverterschaltung 12, die z.B. wie dargestellt als eine H4-Brücke ausgebildet ist und an deren Anschlussklemmen k1 14 und k2 16 eine Gleichtakt-Gegentaktdrossel L1 18 mit Spulen L1 a 20, L1 b 22, L1 c 24 und L1d 26 angeschlossen ist. Weiterhin zeigt die Darstellung einen Kondensator C1 28, über dem die Spannung $U_{ZK}$ abfällt (Pfeil 30). Ein weiterer Pfeil 32 verdeutlicht die Spannung $U_{a1}$ und ein Pfeil 34 die Spannung $U_{a2}$. Weiterhin ist ein Netz 36 dargestellt, das die Netzspannung $U_{Netz}$ (Pfeil 40) vorsieht. Anschlüsse des Netzes 36 sind Anschlüsse n1 42 und n2 44. Anschlüsse an dem Kondensator C1 sind a1 46 und a2 48.

Die Inverter/Brückenschaltung 12 umfasst einen ersten Schalter S1 50, einen zweiten Schalter S2 52, einen dritten Schalter S3 54 und einen vierten Schalter S4 56. Diese Schalter sind vorteilhafterweise als Halbleiterschalter, wie bspw. MOSFET, IGBT, mit interner oder zusätzlicher Freilaufdiode ausgeführt und durch das Ersatzschaltbild eines idealen Schalters mit Freilaufdiode dargestellt.

Die Gleichtakt-Gegentaktdrossel 18 umfasst eine Gleichtaktdrossel 60 mit L1a 20 und L1 b 22 und eine Gegentaktdrossel 62 mit L1 c 24 und L1d 26.

Bei einem beispielhaften Wechsel von Speisen nach Freilauf entsteht bei Verwendung einer reinen H4-Brücke (Inverter/Brückenschaltung 12) und der Gegentaktdrossel 62 ein Spannungssprung von $U_{ZK}/2$ an den Anschlussklemmen a1 46 und a2 48, da die Gegentaktdrossel in diesem Fall als induktiver Spannungsteiler arbeitet und daher die Spannung an den Anschlussklemmen bezogen zu einer Anschlussleitung des Netzes 42 oder 44 abhängig von der Schaltzustandsänderung der Schalter springt.

Die Gleichtaktdrosselfunktion der Gleichtakt-Gegentaktdrossel 18 verhindert das Springen der Potentiale der Anschlussklemmen a1 46 und a2 48, da die Gleichtakt-drosselfunktion den Spannungssprung für eine gewisse Zeit aufnehmen kann. Dieser Spannungssprung, der an der Gleichtaktdrosselfunktion zu einem Spannungsabfall führt, muss durch ein geeignetes Ansteuerverfahren so gestaltet werden, dass der ge-mittelte Spannungsabfall über der Gleichtaktdrosselfunktion zu null wird. Ein dafür geeignetes Modulationsverfahren der Leistungsschalter wird nachstehend beschrieben.

Weiterhin ist zu beachten, dass die Größe der Gleichtaktdrosselfunktion von der Höhe des Spannungssprungs und von der Zeitdauer des Anliegens des Spannungsabfalls abhängig ist. Der dabei entstehende Magnetisierungsstrom muss durch geeignete Schaltungsmaßnahmen, wie bspw. Kondensatoren, abgeführt werden.

Alternativ kann eine separate Ausführung der Gleichtakt-Gegentakt-Drossel als Gleich-taktdrossel (L1a, L1b) und Gegentaktdrossel (L1c, L1d) gewählt werden. Damit ergeben sich jedoch keine Einsparungen im Aufwand für die Drossel.

Nachfolgend werden zur Erläuterung Ausführungsformen von Gleichtakt-Gegentakt-Drosseln gegeben.

Es ist zu berücksichtigen, dass die Herausforderung für den Bau einer Gleichtakt-Gegentakt-Drossel in der gemeinsamen Verwendung der Wicklung sowohl für die Gleichtakt- als auch für die Gegentaktfunktion der Drossel besteht. Dazu muss der Kern durch die Kupferwicklung sowohl die möglichst optimale, magnetische Kopplung zwischen beiden Drosseln für die Common Mode Filterung als auch über einen zweiten, über einen Luftspalt gehenden magnetischen Pfad die Differential Mode Filterung sicherstellen. Dies kann über einen umlaufenden Kern mit Mittelsteg mit Luftspalt ausgeführt werden. Dabei ist der Querschnitt A1 für die CM-Filterung zu dimensionieren sowie der Querschnitt A2 für die DM- Filterung auszulegen.

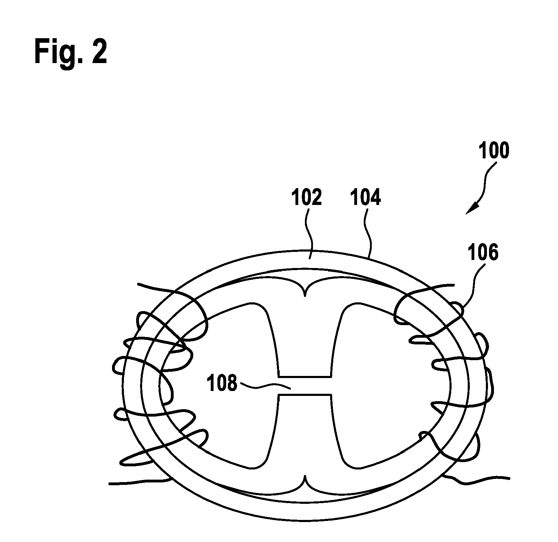

Eine weitere konstruktive Möglichkeit ist die Ausführung mit laminar leitenden Kernen, wie dies in Figur 2 dargestellt ist. Die Figur zeigt eine Gleichtakt-Gegentakt-Drossel 100 mit einem äußeren Kern 102, einem inneren Kern 104 und einer Wicklung 106. Der innere Kern 104 ist über einen Luftspalt 108 geschlossen und beschreibt eine Acht. Der äußere Kern 102 hingegen bildet bzw. beschreibt ein Oval. Die Wicklung 106 umschließt beide Kerne 102 und 104.

Die Anordnung und Anzahl der Luftspalte in Figur 2 ist beispielhaft gewählt und zeigt eine Anordnung mit einem Luftspalt. Selbstverständlich sind auch weitere Luftspalte über den magnetischen Pfad der Gegentaktdrossel verteilt anordenbar.

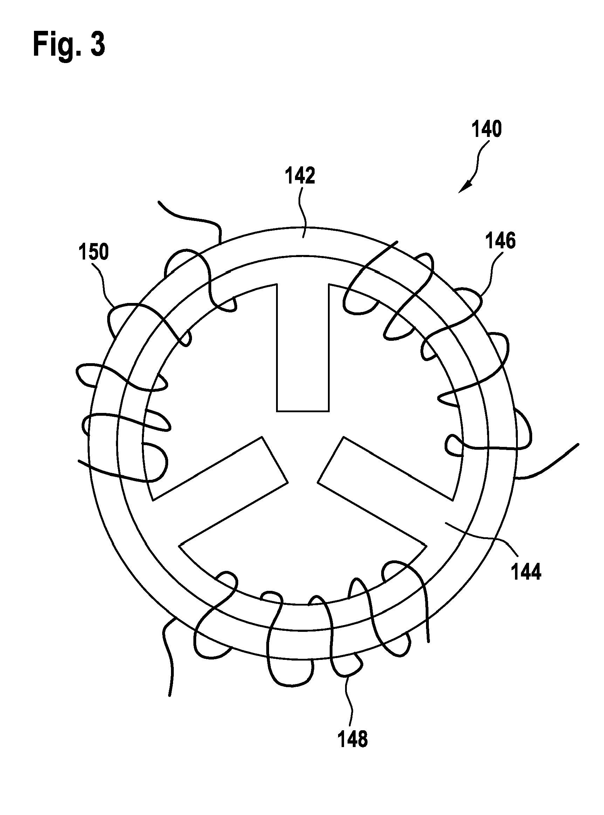

Figur 3 zeigt eine dreiphasige Variante einer Gleichtakt-Gegentakt-Drossel, die insgesamt mit der Bezugsziffer 140 bezeichnet ist. Die Darstellung zeigt einen äußeren Kern 142, einen inneren Kern 144, eine erste Wicklung 146, eine zweite Wicklung 148 und eine dritte Wicklung 150.

Es sind bei entsprechendem Ausgangsnetz oder Schaltungsausführung auch andere Ausführungen als zwei- oder dreiphasige Gleichtakt-Gegentakt-Drosseln denkbar. So kann bei einem dreiphasigen Wechselrichter mit einem weiteren Steller für den Neut-ralleiter dieser als vierte Phase betrachtet werden und eine vierphasige Gleichtakt-Gegentakt-Drossel zum Einsatz kommen.

Die vorgestellte Gleichtakt-Gegentakt-Drossel bietet sich insbesondere für den Einsatz in ein- und dreiphasigen Multistring-Photovoltaik-Wechselrichtern an. Es sind selbstverständlich auch andere Anwendungen denkbar, bei denen Gleichspannung in Wech-selspannung und umgekehrt gewandelt wird und bei der springende Potentiale bzw. ein sogenannter CommonModeCurrent verhindert werden soll.

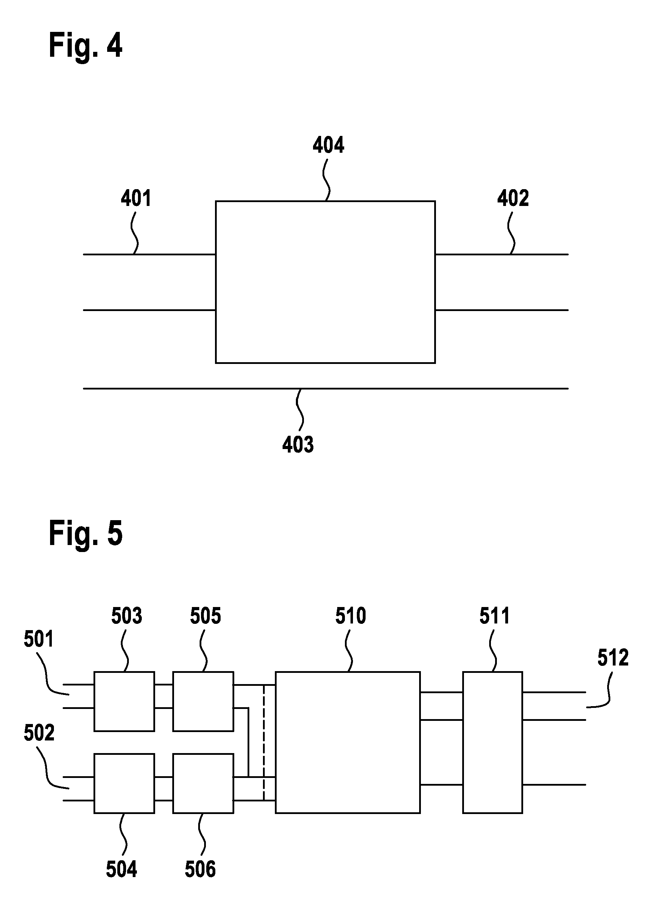

Figur 4 zeigt die Potentiale eines Wechselrichters 404, wobei das Erdpotential 403 als mögliches Bezugspotential sowohl auf der Gleichgrößenseite als auch auf der Wech-selgrößenseite vorhanden ist. Die Potentiale 402 der Leiter auf der Wechselgrößensei-te können bei einem Erdbezug des Stromnetzes auch als Bezugspotential verwendet werden. Die Potentiale 401 der Gleichgrößenseite sind üblicherweise kapazitiv mit dem Erdpotential 403 gekoppelt und dürfen daher nur kontinuierliche Werte gegenüber dem Erdpotential aufweisen.

Figur 5 zeigt die prinzipielle Anordnung der Gleichtakt- und Gegentaktdrosseln eines Wechselrichters bei mehreren Gleichgrößeneingängen. Dabei ist mit Bezugsziffer 501 ein erster Gleichgrößeneingang mit einer ersten CMDM-Drossel 503 zur Glättung und einem ersten DC/DC-Steller 505 und mit Bezugsziffer 502 ein möglicher weiterer Gleichgrößeneingang mit einer weiteren CMDM-Drossel 504 und einem weiteren DC/DC-Steller 506 bezeichnet.

Bei mehr als einem Gleichgrößeneingang mit einem DC/DC-Steller, der Gleichtakt-sprünge erzeugt, ist es zweckmäßig, die Filterdrosseln in einer CMDM-Ausführung an den Gleichgrößeneingängen zu installieren, die auch die Spannungssprünge des Inverters aufnehmen, da dann die Filterdrossel am Wechselgrößenanschluss des Wechselrichters nur für die Gegentaktstörungen ausgelegt werden muss.

Bei nur einem DC/DC-Steller ist es ein Optimierungsproblem, ob eine DM-Drossel am Gleichgrößeneingang und eine CMDM-Drossel am Wechselgrößeneingang oder eine CMDM-Drossel am Gleichgrößeneingang und eine DM-Drossel am Wechselgrößen-eingang zweckmäßig ist.

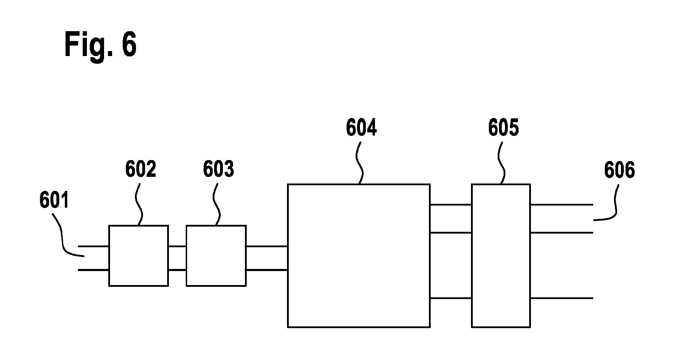

Figur 6 zeigt eine Ausführung eines Wechselrichters bei einer Anordnung der CMDM-Drossel 605 auf der Wechselgrößenseite 606. Der DC/AC-Steller 604 wandelt dabei die Gleichgröße 601 in eine Wechselgröße um. In der gezeigten Ausführung umfasst der Wechselrichter auch noch einen Gleichgrößensteller am Gleichgrößeneingang, der aus einer DM-Drossel 602 und einem Gleichgrößensteller 603 besteht.

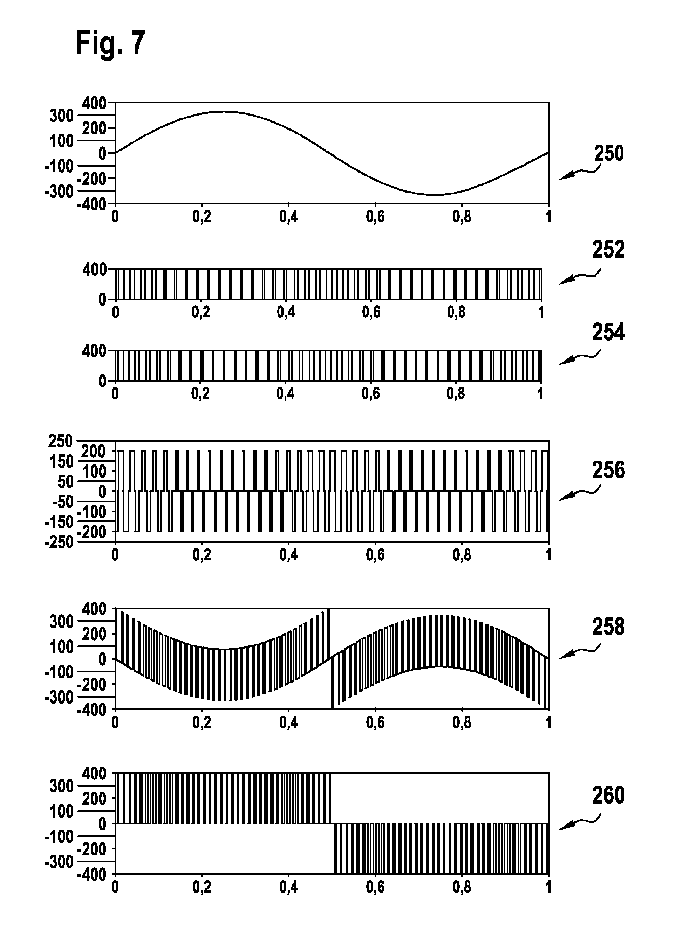

Figur 7 zeigt den prinzipiellen Verlauf von Spannungen bei einem einphasigen Wechselrichter mit H4-Brücke und aktiv geschaltetem Freilauf, der darüber hinaus über eine CMDM-Drossel verfügt. Angelehnt an die prinzipielle Darstellung in Figur 1 zeigt Figur 7 im ersten Diagramm 250 den Verlauf einer typischen 230V-Netzspannung 40 an den Klemmen 42 und 44. Der Spannungsverlauf an Anschluss 14 bezogen zum Potential des Knotens 48 ist im zweiten Diagramm 252 skizziert.

Im dritten Diagramm 254 ist der Spannungsverlauf an Anschluss 16 dargestellt, wieder bezogen auf den Knoten 48. Beide Spannungsverläufe sind für eine Zwischenkreisspannung von 400V dargestellt und entsprechen auch den Schaltzuständen für die Schalter 50 (negiert für 56) für Anschluss 14 sowie 52 (und negiert 54) für Anschluss 16.

Der Spannungsverlauf an den Anschlüssen 14 und 16 entspricht gemittelt über eine Schaltperiodendauer der Ausgangswechselspannung (Pfeil 40) und ist im sechsten Diagramm 260 skizziert. Bezogen auf den Neutral- bzw. Netzanschluss 44 entspricht die gemittelte Spannung von Anschluss 14 und 16 der halben Netzspannung (Pfeil 40).

Die Sprünge der mittleren Spannung, die im vierten Diagramm 256 dargestellt sind, werden von der Gleichtaktdrossel mit den Spulen 20 und 22 aufgenommen, so dass sich nur ein kleiner Magnetisierungsstrom in der Gleichtaktdrossel aufbaut, auch wenn ein Freilaufzustand geschaltet wird. Im fünften Diagramm 258 ist die Spannung an einer DM-Drossel gezeigt.

Wie dargestellt ist, kann mit der Gleichtaktdrossel das Springen der Potentiale bspw. an einem Photovoltaik-Generator durch das Schalten im 20 kHz-Bereich verhindert bzw. zu einem Schwanken mit der Netzspannung vermindert werden. Es bleibt damit das Schwanken mit der Netzspannung (50 Hz), wie es bei dem Verzicht auf das Schalten auch zu sehen ist.

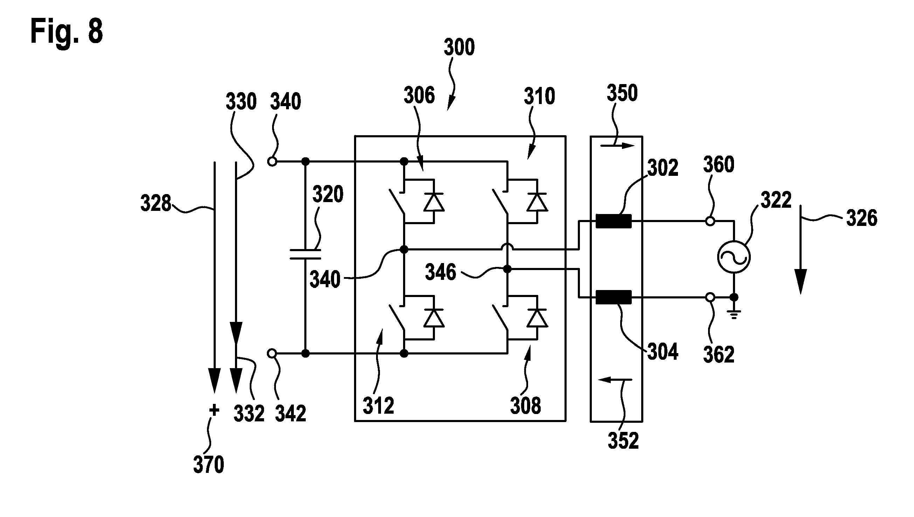

Figur 8 zeigt eine Standard-H4-Brücke 300 mit einer symmetrisch verteilten Ausgangsinduktivität L1 302 und L2 304. Die H4-Brücke 300 umfasst einen ersten Schalter S1 306, einen zweiten Schalter S2 308, einen dritten Schalter S3 310 und einen vierten Schalter S4 312. Weiterhin zeigt die Darstellung einen Kondensator C1 320 und ein Netz 322. Die Netzspannung $U_{Netz}$ ist mit einem Pfeil 326 angezeigt. Ein weiterer Pfeil 328 verdeutlicht die Spannung $U_{a1}$, ein Pfeil 330 die Spannung $U_{ZK}$, ein Pfeil 332 die Spannung $U_{a2}$. Weiterhin ist eine Klemme a1 340, eine Klemme a2 342 sowie eine Klemme k1 344 und eine Klemme k2 346 gezeigt. Über der Induktivität L1 302 fällt die Spannung $U_L$ (Pfeil 350) ebenso wie über der Induktivität L2 304 ab (Pfeil 352). Anschlüsse am Netz 322 sind n1 360 und n2 362.

Aufgrund der symmetrischen Verteilung (L1 = L2) ergeben sich für folgende Zustände die nachfolgenden Spannungsabfälle zwischen den Anschlussklemmen a1 340 und a2 342 und Erde 370. Es zeigt sich, dass bei einem Wechsel zwischen Speisen und Rückspeisen und einem Freilauf die Anschlusspotentiale um die halbe Zwischenkreisspannung $U_{ZK}$ springen, nicht jedoch beim Schalten zwischen Speisen und Rückspeisen.

Speisen (S1,S2 geschlossen):

$$U_{ZK} = U_L + U_{Netz} + U_L \quad \rightarrow \quad U_L = \frac{U_{ZK}}{2} - \frac{U_{Netz}}{2}$$

$$\Rightarrow U_{a2}(=-U_L) = -\frac{U_{ZK}}{2} + \frac{U_{Netz}}{2}$$

$$\boxed{\Rightarrow U_{a1}(=U_{ZK} + U_{a2}) = \frac{U_{ZK}}{2} + \frac{U_{Netz}}{2}}$$

Rückspeisen (S3, S4 geschlossen):

$$U_{ZK} = -U_L - U_{Netz} - U_L \quad \rightarrow \quad U_L = -\frac{U_{ZK}}{2} - \frac{U_{Netz}}{2}$$

$$\Rightarrow U_{a2}(=U_L + U_{Netz}) = -\frac{U_{ZK}}{2} + \frac{U_{Netz}}{2}$$

$$\Rightarrow U_{a1}(=U_{ZK} + U_{a2}) = \frac{U_{ZK}}{2} + \frac{U_{Netz}}{2}$$

Freilauf unten (S4, S2 geschlossen):

$$U_L + U_{Netz} + U_L = 0V \quad \rightarrow \quad U_L = -\frac{U_{Netz}}{2}$$

$$U_{a2}(=-U_L) = \frac{U_{Netz}}{2}$$

$$\boxed{\Rightarrow U_{a1}(=U_L + U_{Netz}) = U_{ZK} + \frac{U_{Netz}}{2}}$$

Freilauf oben (S1, S3 geschlossen):

$$U_L + U_{Netz} + U_L = 0V \quad \rightarrow \quad U_L = -\frac{U_{Netz}}{2}$$

$$\Rightarrow U_{a2}(=U_{a1} - U_{ZK}) = -U_{ZK} + \frac{U_{Netz}}{2}$$

$$\boxed{\Rightarrow U_{a1}(=U_L + U_{Netz}) = \frac{U_{Netz}}{2}}$$

**Patentansprüche**

1. Wechselrichter mit einer Schaltungsanordnung, die zwischen einer Gleich-größenseite und einer Wechselgrößenseite des Wechselrichters (10, 404) angeordnet ist, wobei auf mindestens einer der Seiten des Wechselrichters (10, 404) eine Gleichtakt-Gegentakt-Drossel (18, 100, 140) vorgesehen ist, die in einem Bauteil integriert ist.

2. Wechselrichter nach Anspruch 1, bei dem die Gleichtakt-Gegentakt-Drossel (18, 100, 140) auf der Gleichgrößenseite vorgesehen ist.

3. Wechselrichter nach Anspruch 1, bei dem die Gleichtakt-Gegentakt-Drossel (18, 100, 140) auf der Wechselgrößenseite vorgesehen ist.

4. Wechselrichter nach einem der Ansprüche 1 bis 3, bei dem die Gleichtakt-Gegentakt-Drossel (18, 100, 140) in einem Gehäuse integriert ist.

5. Wechselrichter nach einem der Ansprüche 1 bis 4, bei dem die Inverterschaltung als Vollbrückenschaltung ausgebildet ist.

6. Wechselrichter nach einem der Ansprüche 1 bis 5, bei dem die Gleichtakt-Gegentakt-Drossel (18, 100, 140) dreiphasig ausgebildet ist.

7. Wechselrichter nach einem der Ansprüche 1 bis 5, bei dem die Gleichtakt-Gegentakt-Drossel mehr als dreiphasig ausgebildet ist.

8. Verfahren zum Wechselrichten mit einem Wechselrichter (10, 404) nach einem der Ansprüche 1 bis 7, bei dem schaltungsbedingte Potentialsprünge auf der Gleichgrößenseite durch eine Gleichtakt-Drosselfunktion unterdrückt werden.

9. Verfahren nach Anspruch 8, das zum Wechselrichten einer elektrischen Gleichgröße eingesetzt wird, die von einem photovoltaischen Modul bereitgestellt wird.

Fig. 1

EP 2 814 151 A2

# Fig. 2

# Fig. 3

## Fig. 4

## Fig. 5

Fig. 6

## Fig. 7

Fig. 8

350   302   360   322   326

352   304   362

310   308   346   300   306   312   340

320   340   330   340   332 342   370   328

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009029387 A1
- DE 102004030912 B3
- EP 1369985 B1
- EP 1861914 B1